# EUROPÄISCHE PATENTANMELDUNG

(11) **EP 4 404 050 A2**
(43) Veröffentlichungstag der Anmeldung: **24.07.2024**
(21) Anmeldenummer: 23194322.6
(22) Anmeldetag: 30.08.2023
(51) Int. Cl.: G06F 3/14, G09G 3/00, G09G 3/20, H04W 64/00, H05B 47/19, H05B 45/20, H05B 47/105, G06F 1/16, H04M 1/02, G06F 3/03, H04B 1/3827

(54) **ANZEIGEMODUL, ANZEIGESYSTEM MIT ANZEIGEMODULEN UND VERFAHREN ZUM BETRIEB DES ANZEIGESYSTEMS**

(30) Priorität: 18.01.2023 WO PCT/EP2023/051140
(71) Anmelder: Dynavisual AG, 6300 Zug (CH)
(72) Erfinder: Delavy, Marcel, 8003 Zürich (CH); Paysen-Petersen, Roman, 8193 Eglisau (CH); Ramagnano, Nicola, 8640 Rapperswil (CH); Mathis, Heiz Christian, 8713 Uerikon (CH)
(74) Vertreter: Rigling, Peter Daniel

(57) **Zusammenfassung**

Anzeigemodul (1) mit einer flexiblen Displayeinheit (2) und einem eine Rückseite (4) und eine Vorderseite (5) aufweisenden Gehäuse (3), wobei die flexible Displayeinheit (2) auf der Vorderseite (5) des Gehäuses (3) angeordnet ist, dadurch gekennzeichnet, dass das Gehäuse (3) mehrere Innenräume (6) zur Aufnahme von elektronischen Komponenten (7) aufweist, dass das Gehäuse (3) zumindest entlang von Begrenzungen (8) der Innenräume (6) flexibel ist, indem das Gehäuse (3) auf der Rückseite (4) Ausnehmungen (9) aufweist, die sich zumindest teilweise über die Rückseite (4) erstrecken, wodurch das Gehäuse (3) mit der Displayeinheit (2) innerhalb eines vordefinierten Winkelbereichs (10) entlang der Ausnehmungen (9) beugbar ist. Ferner ist eine Verwendung des Anzeigemoduls (1), ein Anzeigesystem mit einer Vielzahl von Anzeigemodulen (1) sowie ein Verfahren zum Betrieb eines Anzeigesystems angegeben.

## Beschreibung

### TECHNISCHES GEBIET

Die vorliegende Erfindung betrifft ein Anzeigemodul nach dem Oberbegriff von Anspruch 1, eine Verwendung des Anzeigemoduls, ein Anzeigesystem mit einer Vielzahl von Anzeigemodulen sowie ein Verfahren zum Betrieb des Anzeigesystems.

### STAND DER TECHNIK

Neuste Entwicklungen haben flexible Displays hervorgebracht, die neue Anwendungen mit einem biegsamen Display ermöglichen. Dabei ist es oft ein Problem, die richtige Gerätemechanik zu finden, um die flexiblen Displays zu stabilisieren und gegen Schäden beim Falten und Aufrollen zu schützen. Zudem sind besondere Vorkehrungen zu treffen, wenn ein flexibles Display mit allen erforderlichen Komponenten ausgerüstet werden soll, um als unabhängiges Anzeigemodul eingesetzt werden zu können.

### BESCHREIBUNG DER ERFINDUNG

Es ist daher Aufgabe der vorliegenden Erfindung, ein Anzeigemodul mit einer flexiblen Displayeinheit bereitzustellen, das kompakt und robust gebaut ist, gleichzeitig flexibel biegbar ist.

Diese Aufgabe wird durch die im Kennzeichen von Anspruch 1 angegebenen Merkmale gelöst. Weitere Ausführungsformen des erfindungsgemässen Anzeigemoduls, eine Verwendung des Anzeigemoduls, ein Anzeigesystem mit einer Vielzahl von Anzeigemodulen sowie ein Verfahren zum Betrieb des Anzeigesystems sind durch weitere Ansprüche definiert.

Das erfindungsgemässe Anzeigemodul umfasst eine flexible Displayeinheit und ein eine Rückseite und eine Vorderseite aufweisendes Gehäuse, wobei die flexible Displayeinheit auf der Vorderseite des Gehäuses angeordnet ist. Das erfindungsgemässe Anzeigemodul zeichnet sich dadurch aus, dass das Gehäuse mehrere Innenräume zur Aufnahme von elektronischen Komponenten aufweist, dass das Gehäuse zumindest entlang von Begrenzungen der Innenräume flexibel ist, indem das Gehäuse auf der Rückseite Ausnehmungen aufweist, die sich zumindest teilweise über die Rückseite erstrecken, wodurch das Gehäuse mit der Displayeinheit innerhalb eines vordefinierten Winkelbereichs entlang der Ausnehmungen beugbar ist.

Eine Ausführungsvariante des erfindungsgemässen Anzeigemoduls besteht darin, dass sich die Ausnehmungen über die ganze Rückseite des Gehäuses erstrecken.

Weitere Ausführungsvarianten des erfindungsgemässen Anzeigemoduls bestehen darin, dass das Gehäuse rechteckig ist und dass die Ausnehmungen parallel zu Seitenwänden des Gehäuses verlaufen und dabei vorzugsweise die Innenräume gleich gross sind.

Damit wird eine gleichförmige, segmentweise Verbiegung des Gehäuses erreicht.

Weitere Ausführungsvarianten des erfindungsgemässen Anzeigemoduls bestehen darin, dass die Ausnehmungen eine Matrix mit zwei Reihen und drei Kolonnen auf der Rückseite des Gehäuses mit entsprechenden Innenräumen bilden, wobei die Innenräume vorzugsweise gleich gross sind.

Weitere Ausführungsvarianten des erfindungsgemässen Anzeigemoduls bestehen darin, dass die Ausnehmungen eine Tiefe aufweisen, die 50% bis 90%, vorzugsweise 60% bis 80%, vorzugsweise 75% einer mittleren Dicke des Gehäuses entspricht.

Weitere Ausführungsvarianten des erfindungsgemässen Anzeigemoduls bestehen darin, dass die Ausnehmungen auf der Rückseite eine Breite aufweisen, die einen maximalen Biegewinkel der Vorderseite des Gehäuses von 35° ermöglicht.

Weitere Ausführungsvarianten des erfindungsgemässen Anzeigemoduls bestehen darin, dass die Innenräume mindestens einen der folgenden Komponenten aufnehmen:
- Elektronische Komponenten;
- Batterie;
wobei die Komponenten mittels flexiblen Prints verbindbar sind.

Weitere Ausführungsvarianten des erfindungsgemässen Anzeigemoduls bestehen darin, dass mindestens eine der folgenden Funktionen realisiert sind:
- Drahtlose Datenübertragung, beispielsweise nach dem Wifi-Standart 2.4GHz;
- Bluetooth Low Energy mit Kopplungsoption zu mehreren mit Bluetooth-Schnittstellen ausgestatteten Geräten;
- Drei-Achsen Gyroskop;
- Drei-Achsen Beschleunigungsmesser;
- Gestenerkennung, einschliesslich Unterstützung durch Maschinen-lernbare Algorithmen;
- Mikrophon für die Tonaufnahme und Verarbeitung mittels Maschinen-lernbaren Algorithmen;
- Kryptographischer Co-Prozessor für eine sichere Verschlüsselung und Übertragung von Daten;
- Datenspeicher;
- Infrarot Präzisionsortung, vorzugsweise in Innenräumen;
- USB-C Ladeanschluss für die Batterien 15;
- 4G- und/oder 5G- Kommunikationsmodule für die mobile Kommunikation über bestehende öffentliche oder private Kommunikationsnetzwerke;
- Temperatursensoren.

Weitere Ausführungsvarianten des erfindungsgemässen Anzeigemoduls bestehen darin, dass die maximale Helligkeit der Displayeinheit 6'400 Candela pro Quadratmeter beträgt.

Die Erfindung betrifft des Weiteren eine Verwendung des Anzeigemoduls zum Tragen in Mützen, Armbändern, Helmhüllen, Kleidern, Sicherheitswesten, Arbeitskleidern und weiteren Textilien, die das Anbringen einer Tragtasche oder eines Tragsystems erlauben. Beispielsweise wird das Anzeigemodul in einer Tasche aus transparentem oder teilweise transparentem Textil getragen, womit die auf dem Anzeigemodul dargestellt Information durch das Textil sichtbar ist.

Ferner betrifft die Erfindung ein Anzeigesystem, umfassend
- eine Vielzahl von Anzeigemodulen, die je eine flexible Displayeinheit, mindestens eine Infraroteinheit, eine Steuereinheit, eine Datenübermittlungseinheit und eine Energieversorgungseinheit aufweisen, wobei bei jedem Anzeigemodul die Displayeinheit, die mindestens eine Infraroteinheit, die Steuereinheit, die Datenübermittlungseinheit und die Energieversorgungseinheit miteinander wirkverbunden sind,
- eine zentrale Recheneinheit,
- mindestens eine Datentransmissionseinheit, die einerseits mit der zentralen Recheneinheit anderseits mit der Datenübermittlungseinheit des Anzeigemoduls zumindest zeitweise miteinander wirkverbunden sind,
wobei
- jedem Anzeigemodul ein eindeutiger Identifikationscode zugeordnet ist, der mit einem durch die mindestens eine Infraroteinheit ausgesendetes Infrarotsignal übertragbar ist,
- mindestens eine Bilderfassungseinheit zur Erfassung der mit den Infraroteinheiten ausgesendeten Infrarotsignale vorgesehen ist,
- die mindestens eine Bilderfassungseinheit mit der zentralen Recheneinheit wirkverbunden ist, in der die Positionen der einzelnen Anzeigemodulen bestimmbar sind, und
- die zentrale Recheneinheit einen Datenspeicher mit Bilddaten aufweist, die zumindest teilweise und in Abhängigkeit von der Position der Anzeigemodule bearbeitet und an diese zur Einstellung von Helligkeit und/oder Farbe der entsprechenden Displayeinheit übertragen werden.

Eine weitere Ausführungsvariante des erfindungsgemässen Anzeigesystems besteht darin, ein Bandpassfilter vor der Bilderfassungseinheit angeordnet ist, wobei das Bandpassfilter vor allem Infrarotsignale mit Wellenlängen im Bereich von 700nm bis 1400nm durchlässt.

Schliesslich umfasst die vorliegende Erfindung ein Verfahren zum Betrieb eines Anzeigesystems, wobei das Verfahren die Schritte umfasst:
- Aussenden eines mit einer Infraroteinheit des Anzeigemoduls erzeugten Infrarotsignals, umfassend einen modulierten Identifikationscode, der für das jeweilige Anzeigemodul eindeutig ist,
- Erfassen des Infrarotsignals mit einer Bilderfassungseinheit,
- Ermitteln einer momentanen Position des Anzeigemoduls,
- Ermitteln eines Helligkeitswertes und/oder eines Farbewertes eines Anzeigemoduls aufgrund der momentanen Position und aufgrund von abgespeicherten Bilddaten,
- Übertragen der Helligkeitswerte und/oder der Farbwerte an das jeweilige Anzeigemodul,
- Einstellen der Helligkeitswerte und/oder der Farbwerte im Anzeigemodul.

Eine weitere Ausführungsvariante des erfindungsgemässen Verfahrens zeichnet sich durch Filtern von Signalen mit einem Bandpassfilter vor dem Erfassen mit der Bilderfassungseinheit aus, wobei das Bandpassfilter vor allem Infrarotsignale mit Wellenlängen im Bereich von 700nm bis 1400nm durchlässt.

Weitere Ausführungsvarianten des erfindungsgemässen Verfahrens bestehen darin, dass der Schritt zur Ermittlung der momentanen Position des Anzeigemoduls folgendes umfasst:
- Erzeugen einer Bildabfolge aus einer mit den Bilderfassungseinheiten aufgenommenen Videosequenzen,
- Berechnung der Kreuzkorrelation zwischen einer Synchronisationssequenz und Werten eines Bildpunktes,
- Vergleichen der berechneten Kreuzkorrelation mit einem vorgegebenen Schwellwert,
- Selektion der Bildpunkte, welche einen über dem vorgegebenen Schwellwert liegenden Kreuzkorrelationswert aufweisen,
- Extrahieren der Meldesequenzen an den selektierten Bildpunkten,
- Erzeugen für jeden ermittelten Bildpunkt die Bildpunktkoordinaten, eine entsprechende Meldesequenz und eine geschätzte Signalamplitude.

Noch weitere Ausführungsvarianten des erfindungsgemässen Verfahrens bestehen darin, dass der Schritt des Ermittelns eines Helligkeitswertes und/oder eines Farbewertes eines Anzeigemoduls aufgrund der momentanen Position und aufgrund von abgespeicherten Bilddaten folgendes umfasst:
- Umwandeln von Bildpunktkoordinaten in Positionskoordinaten eines Anzeigemoduls innerhalb einer Projektionsfläche mit Hilfe einer Homographie-Abbildung und
- Zuweisung eines Helligkeitswertes und/oder eines Farbewertes an den Positionskoordinaten des Anzeigemoduls aufgrund von abgespeicherten Bilddaten.

Die erwähnten Ausführungsformen der vorliegenden Erfindung lassen sich in beliebiger Weise kombinieren. Lediglich diejenigen Kombinationen sind ausgeschlossen, die durch eine Kombination zu einem Widerspruch führen würden.

### KURZE BESCHREIBUNG DER FIGUREN

Ausführungsbeispiele der vorliegenden Erfindung werden nachstehend anhand von Figuren noch näher erläutert. Diese dienen lediglich zur Erläuterung und sind nicht einschränkend auszulegen. Es zeigen
- Fig. 1: ein erfindungsgemässes Anzeigemodul in perspektivischer Explosivdarstellung,
- Fig. 2: das zusammengesetzte erfindungsgemässe Anzeigemodul gemäss Fig. 1 in perspektivischer Darstellung,
- Fig. 3: eine Detailansicht des erfindungsgemässen Anzeigemoduls 1 im Bereich einer Ausnehmung mit Blick parallel zu einer Längsachse der Ausnehmung,
- Fig. 4: eine Draufsicht auf eine Vorderseite des erfindungsgemässen Anzeigemodul gemäss Fig. 1 bis 3 mit Infraroteinheiten zur Ortung in einem Innenbereich,
- Fig. 5: das erfindungsgemässe Anzeigemodul in einem gebogenen bzw. geknickten Zustand,
- Fig. 6: ein erfindungsgemässes Anzeigesystem mit mehreren erfindungsgemässen Anzeigemodulen,
- Fig. 7: ein Blockdiagramm eines erfindungsgemässen Anzeigemoduls und
- Fig. 8: ein Flussdiagramm mit erfindungsgemässen Verfahrensschritten zur Bestimmung der Position eines Anzeigemoduls.

### DETAILLIERTE BESCHREIBUNG DER ERFINDUNG

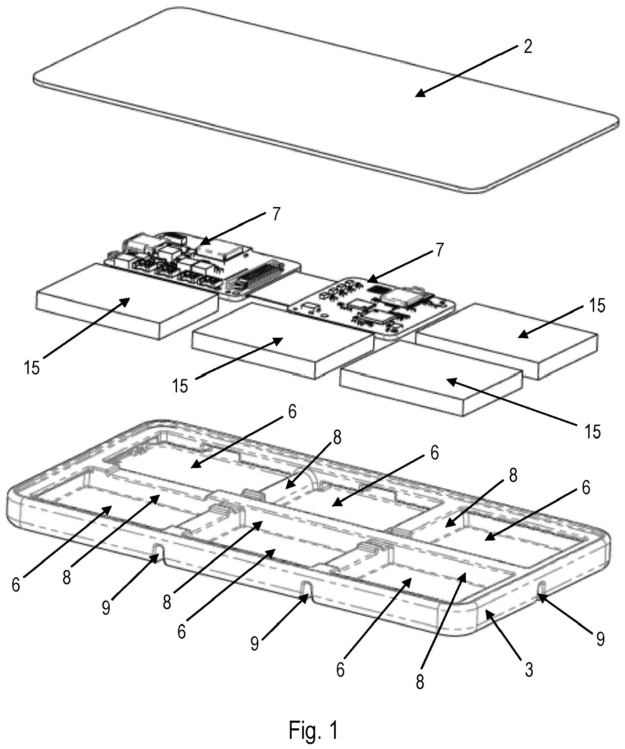

Fig. 1 zeigt ein erfindungsgemässes Anzeigemodul 1 in perspektivischer Explosivdarstellung, in der ein Gehäuse 3, mehrere Komponenten 7, 15 und eine Displayeinheit 2 darstellt sind. Von Bedeutung ist, dass das erfindungsgemässe Anzeigemodul 1 unabhängig von anderen Komponenten betrieben werden kann. Dies bedeutet, dass das erfindungsgemässe Anzeigemodul 1 autonom ist in Bezug auf die Verarbeitung von Daten als auch in Bezug auf die Energieversorgung. Das erfindungsgemässe Anzeigemodul 1 ist somit nicht ortsgebunden. Dessen ungeachtet ist das erfindungsgemässe Anzeigemodul 1 so ausgestattet, dass es von ausserhalb gesteuert bzw. mit Daten versorgt werden kann bzw. Daten an eine übergeordnete Servereinheit übermitteln kann. Die hierzu notwendigen Kommunikationsmittel werden noch im Detail erläutert.

Das Gehäuse 3 ist bei der dargestellten Ausführungsvariante der vorliegenden Erfindung aus einem Stück geformt, wobei hierzu ein gummielastischer Polymer (Elastomere) verwendet wird, wie beispielsweise ein Polyurethan, bei dem durch Beimischung eines Extenders eine gewünschte Härte einstellbar ist. Es hat sich gezeigt, dass die gewünschte Härte beispielsweise im Bereich von 60 bis 100 Shore A liegen soll, vorzugsweise gleich 80 Shore A beträgt.

Das erfindungsgemässe Gehäuse 3 ist im Inneren in Innenräume 6 aufgeteilt, die Komponenten wie elektronische Komponenten 7 und Batterien 15 aufnehmen können. Da die Komponenten 7, 15 häufig eine gewisse Steifigkeit aufweisen, lässt sich das Gehäuse 3 im Bereich der Innenräume 6 nur geringfügig beugen. Erfindungsgemäss werden daher auf einer Rückseite 4 des Gehäuses 3 im Bereich von Begrenzungen 8 der Innenräume 6 Ausnehmungen 9 mit einer Tiefe 11 vorgesehen, die beispielsweise 50% bis 90%, vorzugsweise 60% bis 80%, vorzugsweise 75% einer mittleren Dicke 12 des Gehäuses 2 entspricht. Die mittlere Dicke 12 ergibt sich aus den äusseren Abmessungen des montierten Anzeigemoduls 1 von auf einer Vorderseite 5 montierten Displayeinheit 2 bis zur Rückseite 4 des Gehäuses 2.

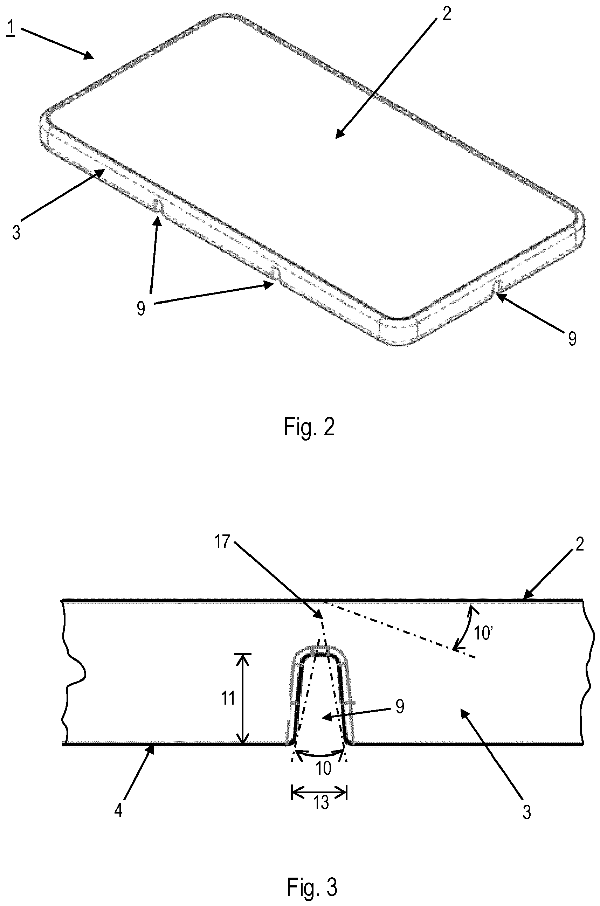

Die maximale Biegung des Anzeigemoduls 1 bzw. des Gehäuses 3 im Bereich der Begrenzungen 8 der Innenräume 6 bzw. der Ausnehmungen 9 wird ferner durch eine Breite 13 der Ausnehmung 9 eingestellt (siehe hierzu auch Fig. 3). So wird die Breite 13 auf einer Ebene der Rückseite des Gehäuses 3 so gewählt, dass ein maximaler Biegewinkel 14 von 35° erreicht werden kann, d.h. das Anzeigemodul 1 bzw. das Gehäuse 2 kann bei einer Ausnehmung 9 in Bezug auf eine entspannte Ausgangslage um maximal 35° gebogen werden.

Wie aus Fig. 1 ersichtlich ist, erstrecken sich die Ausnehmungen 9 über die ganze Rückseite 4 des Gehäuses 3. Bei einer weiteren Ausführungsvariante der vorliegenden Erfindung ist auch denkbar, dass die Ausnehmungen 9 durch Stege (nicht dargestellt) unterbrochen sind. Hierdurch wird die Biegefähigkeit für eine bestimmte Härte des für das Gehäuse 3 verwendeten Materials zwar eingeschränkt, dagegen wird hierdurch die Festigkeit bzw. Robustheit erhöht.

Das in den Figuren dargestellt Anzeigemodul 1 und damit das Gehäuse 3 sind rechteckig mit parallel zu den Seitenwänden des Gehäuses 3 verlaufenden Ausnehmungen 9. Bei weiteren Ausführungsvarianten der vorliegenden Erfindung ist auch denkbar, dass das Anzeigemodul 1 bzw. das Gehäuse 3 ein beliebiges Polygon ist. Entsprechend können auch die Ausnehmungen in beliebiger Art verlaufen.

Ferner verlaufen die Ausnehmungen 9 bei dem in Fig. 1 dargestellten Gehäuse 3 derart, dass im Gehäuse 3 zwei Reihen und drei Kolonnen von Innenräumen 6 entstehen. Entsprechend kann das Anzeigemodul 1 bzw. das Gehäuse 3 abschnittsweise gebogen werden. Eine regelmässige Anordnung der Ausnehmungen 9 - und damit gleich grosse Innenräume 6 - wird zwar bei einer Ausführungsvariante der vorliegenden Erfindung bevorzugt, ist aber keine Notwendigkeit. Denkbar ist bei einer weiteren Ausführungsvariante eine beliebige Anordnung der Ausnehmungen 9.

Fig. 2 zeigt eine perspektivische Darstellung des erfindungsgemässen Anzeigemoduls 1 in vollständig zusammengesetzter Form.

Fig. 3 zeigt eine Detailansicht des Anzeigemoduls 1 im Bereich einer Ausnehmung 9 mit Blick parallel zu einer Längsachse der Ausnehmung 9. Wie bereits erläutert wurde, weist die Ausnehmung 9 auf einer Ebene der Rückseite 4 des Gehäuses 3 die Breite 13 und die Tiefe 11 auf. Hierdurch und in Abhängigkeit der Elastizität des für das Gehäuse 3 verwendeten Materials wird der Winkelbereich 10 einstellbar. Ausgehend von einem Scheitelpunkt 17, dessen Lage mittig zwischen der maximalen Tiefe 11 der Ausnehmung 9 und der Displayeinheit 2 angenommen wird, ist der maximale Winkelbereich 10 ersichtlich, um den die Displayeinheit 2 gebogen werden kann, wie dies durch den strichliniert angedeuteten Winkel 10' angegeben ist.

Der Vollständigkeit halber wird darauf hingewiesen, dass eine Biegung der Displayeinheit 2 grundsätzlich auch in die andere Richtung möglich ist. Dabei ist auch hier insbesondere das Gehäuse 3 bzw. dessen Elastizität für die Begrenzung einer solchen Negativbiegung massgebend.

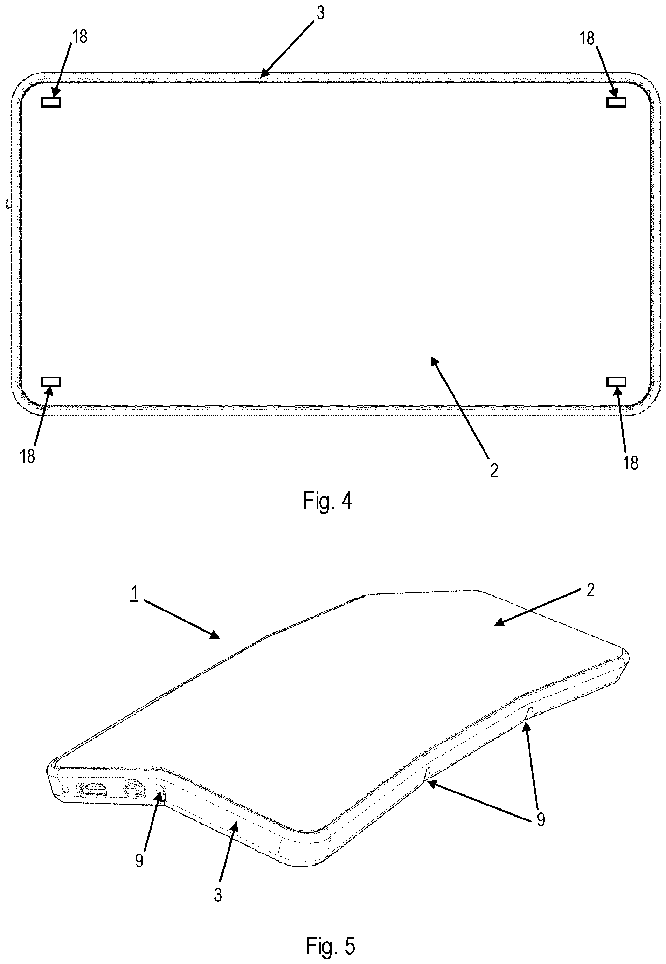

Fig. 4 zeigt eine Draufsicht auf die Vorderseite 5 einer Ausführungsvariante des erfindungsgemässen Anzeigemoduls 1. Bei dieser Ausführungsvariante weist die Displayeinheit 2 in ihren Ecken Infraroteinheiten 18 auf, die zur Positionsbestimmung der Anzeigeeinheit 1 in einem Innenbereich verwendet wird.

Fig. 5 zeigt das erfindungsgemässe Anzeigemodul 1 in einer perspektivischen Darstellung, wobei das Gehäuse 3 in den dafür vorgesehenen Ausnehmungen 9 maximal gebeugt bzw. geknickt ist. Hierdurch werden das Gehäuse 3 und die flexible Displayeinheit 2 abschnittweise gekrümmt. Im Rahmen des maximalen Biegewinkels 14 (siehe Fig. 3 und die Ausführungen in der Beschreibung zu Fig. 3) kann sich das Gehäuse 3 mit der flexiblen Displayeinheit 2 sehr gut von aussen vorgegebenen Krümmungen (z.B. an Körperkrümmungen) anpassen.

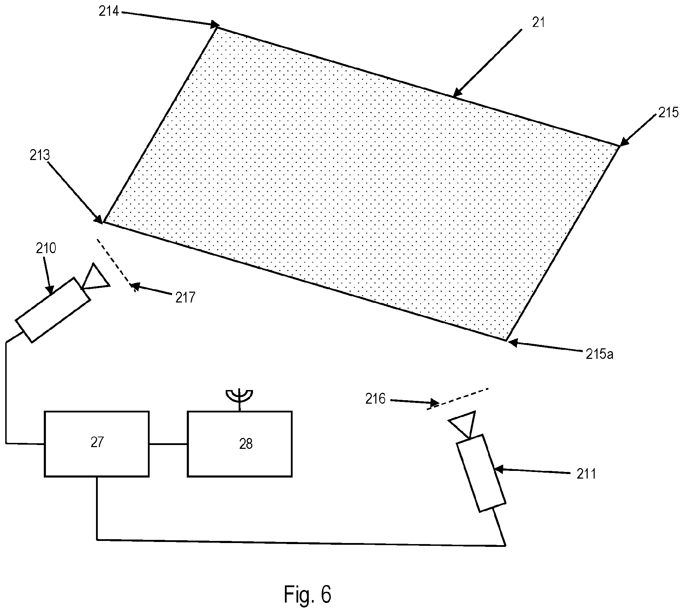

Fig. 6 zeigt eine schematische Darstellung eines erfindungsgemässen Anzeigesystems, bestehend aus einer Projektionsfläche 21 mit einer Vielzahl von beweglichen Anzeigemodulen 1 sowie einer zentralen Recheneinheit 27, einer Datentransmissionseinheit 28 und zwei Bilderfassungseinheiten 210 und 211.

Die Anzeigemodule 1, die sich innerhalb der Projektionsfläche 21 befinden, bilden einen Grossbildschirm, wobei die einzelnen Anzeigemodule 1 Bildelemente oder Pixel des Grossbildschirms sind. Dabei kann die Projektionsfläche 21 einen Teil einer Tribüne oder eines sonstigen Zuschauerbereichs einer Veranstaltungsstätte sein, die beispielsweise ein Sportstadium, ein Theater oder ein Konzertsaal ist. Es ist vorgesehen, dass jeder Veranstaltungsbesucher ein Anzeigemodul 1 trägt, wobei dies nicht zwingend erforderlich ist.

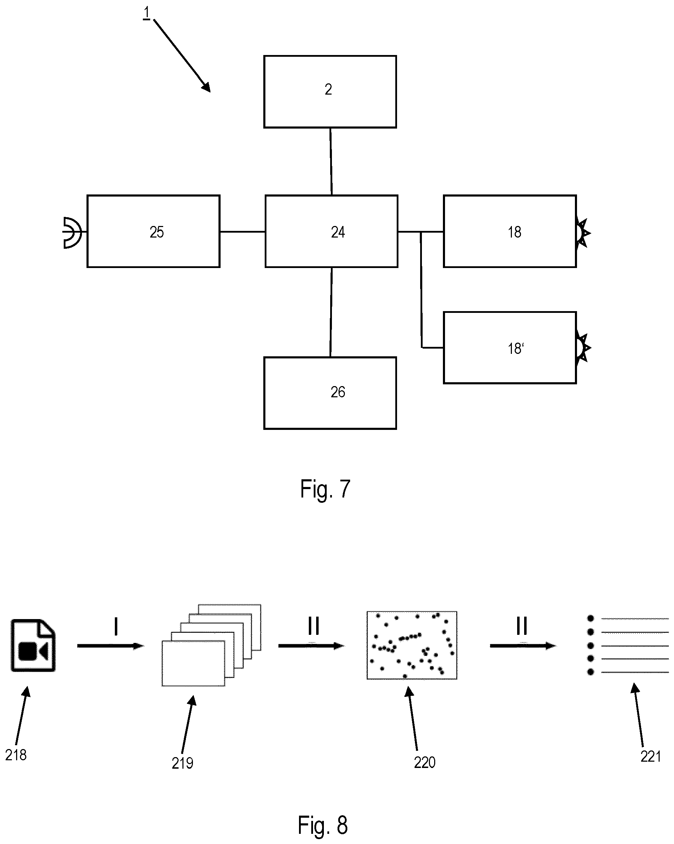

Der innere Aufbau der Anzeigemodule 1 wird anhand eines in Fig. 7 dargestellten Blockschaltbildes weiter erläutert werden.

Für eine korrekte Bilderzeugung auf der Projektionsfläche 21 müssen die Positionen der Bildpunkte, d.h. der Anzeigemodule 1, in der Projektionsfläche 21 bekannt sein. Hierzu sind, neben einer entsprechenden Ausgestaltung der Anzeigemodule, die miteinander wirkverbundenen zentralen Recheneinheit 27, die Datentransmissionseinheit 28 und die beiden Bilderfassungseinheiten 210 und 211 vorgesehen. Es wird darauf hingewiesen, dass es nicht erforderlich ist, dass zwei Bilderfassungseinheiten 210, 211 vorhanden sein müssen. Denkbar sind auch Ausführungsvarianten der vorliegenden Erfindung mit einer einzigen Bilderfassungseinheit oder mit mehreren, insbesondere mit mehr als zwei Bilderfassungseinheiten. Die Verwendung von mehreren Bilderfassungseinheiten hat den Vorteil, dass die Positionen der Anzeigemodule 1 robuster und zuverlässiger ermittelt werden können.

Fig. 7 zeigt ein Blockschaltbild eines erfindungsgemässen Anzeigemoduls 1, die aus Displayeinheit 2, aus einer Steuereinheit 24, aus einer Datenübermittlungseinheit 25, aus einer Batterie 15 als Energieversorgungseinheit und aus mindestens einem Infraroteinheit 18, 18' besteht. Diese Komponenten des Anzeigemoduls 1 sind miteinander wirkverbunden und soweit möglich hoch-integriert hergestellt, um ein kostengünstiges Anzeigemodul 1 erhalten zu können und um das Gesamtgewicht des Anzeigemoduls 1 möglichst tief halten zu können.

Um den Energieverbrauch möglichst gering zu halten bzw. um einen Betrieb des Anzeigemoduls 1 möglichst lange gewährleisten zu können, ist die Displayeinheit 2 zum Beispiel mittels LED-(Licht Emittierenden Dioden) oder einer LED-Matrix realisiert. Das gleiche gilt für die Infraroteinheiten 18, 18', die mit IR-Dioden realisiert sind.

Die Datenübermittlungseinheit 25 kann als reine Datenempfangseinheit oder als bidirektionale Datenübermittlungseinheit konzipiert sein und dient als Kommunikationseinheit mit der Datentransmissionseinheit 28 (Fig. 6). Die Angaben für die Ansteuerung der Displayeinheit 2 werden zum Beispiel in der zentralen Recheneinheit 27 bestimmt bzw. aufbereitet und mit der Datentransmissionseinheit 28 über eine drahtlose Verbindung an die Datenübermittlungseinheit 25 übertragen. Hierbei können zum Beispiel bekannte Übertragungsprotokolle verwendet werden, wie sie bei Bluetooth oder WLAN-(Wireless Local Area Networks) zum Einsatz kommen.

Die Infraroteinheiten 18 bzw. 18' sind wesentliche Komponenten, die zur Positionsbestimmung der Anzeigemodule 1 verwendet werden. Dabei senden die Infraroteinheiten 18, 18' ein für das menschliche Auge nicht sichtbares Infrarotsignal mit einem für das jeweilige Anzeigemodul 1 eindeutigen Identifikationscode aus. Die Infraroteinheit 9, 9' sendet zum Beispiel im sogenannten nahen Infrarot Infrarotsignale aus, in denen die Wellenlängen im Bereich von 700nm bis 1400nm betragen. Bei einer besonderen Ausführungsvariante der vorliegenden Erfindung beträgt die Wellenlänge im wesentlichen 940nm.

Die mit den Infraroteinheiten 18, 18' ausgesendeten Infrarotsignale werden von den Bilderfassungseinheiten 210, 211 erfasst und zur Identifikation des jeweiligen Anzeigemoduls 1 in der zentralen Recheneinheit 27 verarbeitet. Entsprechend sind die Bilderfassungseinheiten 210, 211 im jeweiligen Infrarotspektrum der Infrarotsender sensitiv, d.h. es können die entsprechenden Infrarotsignale der Infraroteinheiten 18, 18' in den Bilderfassungseinheiten 210, 211 erfasst und detektiert werden.

Zur weiteren Verbesserung der Sensitivität der Bilderfassungseinheiten 210, 211 ist diesen bei einer weiteren Ausführungsvariante der vorliegenden Erfindung ein optischer Bandpassfilter 216, 217 vor der jeweiligen Bilderfassungseinheit 210, 211 - d.h. vor deren Sensoren - angeordnet. Damit werden Signale, welche ausserhalb des durch die Infraroteinheiten 18, 18' verwendeten nahen Infrarot liegen - wie zum Beispiel Umgebungslicht im sichtbaren Bereich -, stark gedämpft, so dass diese sichtbaren Signalanteile den Sensor der jeweiligen Bilderfassungseinheit 210, 211 nicht sättigen können, womit die schwächeren Infrarotsignale mehr verstärkt werden können und damit besser auswertbar sind. Eine Verbesserung der Sensitivität wird ferner auch dadurch erhalten, dass der Nutzsignal/Störsignal-Abstand (auch Signal-zu-Interferenz-Verhältnis genannt) durch die Verwendung des Bandpassfilters grösser wird.

Um die einzelnen Anzeigemodule 1 unterscheiden zu können, ist jedem Anzeigemodul 1 ein eindeutiger Identifikationscode zugeordnet. Der Identifikationscode ist in eine Meldesequenz - bestehend aus Synchronisationssequenz, Identifikationscode und einer Prüfsumme - eingebettet. Damit kann die Bilderfassungseinheit 210, 211 die Identifikationscodes nach dem Empfang von der Infraroteinheit 18, 18' zuverlässig ermitteln, was in den nachfolgenden Erläuterungen deutlich werden wird.

Jede Meldesequenz startet mit der Synchronisationssequenz, die für jedes Anzeigemodul 1 identisch ist. Das Ziel und der Zweck der Synchronisationssequenz bestehen darin, den Beginn der Meldesequenz zu definieren, um den Beginn der Meldesequenz eindeutig detektieren zu können. Nach der Synchronisationssequenz folgt der Identifikationscode, der nun nach der Detektion der Synchronisationssequenz ebenfalls detektiert werden kann. Schliesslich folgt die Prüfsumme (z. B. vom Typ CRC-16 - engl. *«cyclic redundancy check»),* die einen Übertragungsfehler erkennen lässt.

Die Meldesequenz wird dazu verwendet, die Intensität der IR-Dioden der Infraroteinheit 18, 18' zu modulieren. Beispielsweise wird das On-off-Keying (OOK) als Modulationsverfahren verwendet, das digitale Daten als An- oder Abwesenheit des Trägersignals darstellt. Die Synchronisationssequenz wird so gewählt, dass er hervorragende Autokorrelationseigenschaften aufweist. Dies macht es der Bilderfassungseinheit 210, 211 leichter, die Synchronisationssequenz innerhalb des empfangenen Signals zu erkennen und die genaue Position zu bestimmen, da der höchste Korrelationswert nur bei der Zeitverschiebung Null gefunden wird. Die Länge der Synchronisationssequenz ist ein Kompromiss zwischen Autokorrelationsleistung und Nachrichtendauer. Je mehr Chips für die Synchronisationssequenz einerseits verwendet werden, desto besser ist die Autokorrelationseigenschaft. Andererseits erhöht eine längere Synchronisationssequenz die Nachrichtendauer. Darüber hinaus sinkt die Geschwindigkeit, mit der eine Position eines Anzeigemoduls 1 berechnet werden kann. Beispielsweise umfasst die Synchronisationssequenz 48 Chips und wird mit einem auf heuristischer Suche basierenden Algorithmus erstellt, wie dies beispielsweise im Aufsatz der Autoren M. Dimitrov, T. Baitcheva und N. Nikolov mit dem Titel «Efficient Generation of Low Autocorrelation Binary Sequences» (IEEE Signal Processing Letters, vol. 27, pp. 341-345, 2020) beschrieben worden ist.

Ausserdem wurde die Anzahl der on- und off-Bits in der Synchronisationssequenz absichtlich gleich gewählt, um eine durch die Helligkeit des Hintergrunds verursachte Korrelationsabweichung zu vermeiden. Die gleiche Eigenschaft wird für die verbleibenden Bits (d.h. der Identifikationscode und der Prüfsumme) durch die Verwendung einer Technik erreicht, die als BOC-Modulation (Binary Offset Carrier) bezeichnet wird. Bei der BOC-Modulation werden die Datenbits mit einem binären Trägersignal multipliziert, das zwei, drei oder mehr Halbperioden pro Bit haben kann. Alle Träger mit einer geraden Anzahl von Halbperioden haben die gleiche Anzahl von Einschalt- und Ausschaltteilen (auch Chips genannt). Beispielsweise wird eine «BOC-Sine-2-Modulation» (auch Manchester-Code genannt) mit zwei Halbperioden pro Bit verwendet.

Der Identifikationscode ist beispielsweise mit 24 Bit spezifiziert, so dass insgesamt 16 Millionen eindeutige Identifikationscodes verwendet werden können. Zusammen mit den 16 Bits der CRC-16-Prüfsumme ergibt sich eine Summe von 24 + 16 = 40 Bits oder 80 Chips bei Verwendung der BOC-Sine-2-Modulation. Somit besteht die gesamte Nachricht aus 48 + 80 = 128 Chips.

In Fig. 6 sind die Bilderfassungseinheiten 210 und 211 mit einer Drahtverbindung mit der zentralen Recheneinheit 27 verbunden. Eine alternative Ausführungsvariante der vorliegenden Erfindung sieht vor, dass die Bilderfassungseinheiten 210 und 211 mittels drahtloser Verbindung mit der zentralen Recheneinheit 27 verbunden sind.

Mit den Bilderfassungseinheiten 210 und 211 werden Filmsequenzen beispielsweise mit einer Einzelbildgrösse von 1640x1232 Bildpunkten und einer Bildfolge von 30 Bilder pro Sekunde aufgenommen.

Die Bildrate der Bilderfassungseinheiten 210 und 211 bestimmt auch die maximal zulässige Chiprate, die die Infraroteinheiten 18, 18' für die Übertragung seiner Nachricht verwenden kann. Wenn alle Infraroteinheiten 18, 18' theoretisch perfekt mit der Bilderfassungseinheit 210, 211 synchronisiert sind, würde theoretisch ein einziges Bild pro übertragenen Chip ausreichen.

Falls die Infraroteinheiten 18, 18' nicht mit der Bilderfassungseinheit 210, 211 synchronisiert sind, so kann sich die Belichtungszeit eines Bildes mit zwei benachbarten Chips überschneiden, was zu einer falschen Amplitude führen kann, wenn die beiden Chips ungleich sind.

Es hat sich daher gezeigt, dass die Verwendung von drei Einzelbildern pro Chip unter Inkaufnahme eines geringen Amplitudenverlust in Kauf genommen werden kann. Bei einer Bildrate von 30 Bildern pro Sekunde, drei Bilder pro Chip und einer Gesamtzahl von 128 Chips für eine Nachricht, ergibt sich eine Gesamtdauer einer Nachricht von 12.8s.

Die mit der oben beschriebenen Bilderfassungseinheit 210, 211 aufgezeichnete Videodatei 218 wird auf der zentralen Rechnereinheit 27 verarbeitet, um eine Liste aller gültigen Meldungen der in der Videodatei 218 vorhandenen Infraroteinheiten 18, 18' zu erhalten. Dies geschieht in mehreren Schritten I bis III, die im Folgenden unter Bezugnahme auf Fig. 8 erläutert werden.

Der erste Schritt I besteht darin, alle Bilder aus der Videodatei 218 zu extrahieren und sie als mehrdimensionale Reihe 219 («Array of Frames» oder «Bildabfolge» bzw. «Bilderreihe») zu speichern. Dies erleichtert die Berechnungen, die auf alle Einzelbilder angewendet werden. Damit der Speicherbedarf reduziert werden kann, kann beispielsweise jedes einzelne Bild durch Reduktion (so genanntes «Pixel Binning») verkleinert werden.

Bei einer vereinfachten Ausführungsvariante der vorliegenden Erfindung werden die von den Bilderfassungseinheiten 210, 211 erfassten Videosequenzen direkt in die mehrdimensionalen Reihen 219 verarbeitet, d.h. eine Speicherung der Videosequenzen in den erwähnten Videodateien wird nicht vorgenommen.

Der zweite Schritt II besteht darin, nach einer Synchronisationssequenz an jeder Bildpunktposition zu suchen. Dies geschieht durch Kreuzkorrelation der Synchronisationssequenz mit den Werten eines Bildpunktes entlang aller Frames. Vorliegend wird die Berechnung der Kreuzkorrelation mit Hilfe der Fast Fourier-Transformation (FFT) vorgeschlagen, da diese die Berechnungen erheblich beschleunigt. Anschliessend wird der höchste absolute Korrelationswert eines jeden Bildpunktes mit einem Schwellenwert verglichen, der dem Korrelationswert eines Bildpunktes mit der minimal zulässigen Signalamplitude entspricht. Auf diese Weise werden nur die Bildpunkte mit einer höheren Wahrscheinlichkeit berücksichtigt.

Bei diesem Ansatz wird davon ausgegangen, dass sich das Anzeigemodul 1 ungefähr am gleichen Ort (d.h. gleich beleuchtete Bildpunkte) während der Dauer einer Meldesequenz bleiben. Das Ergebnis dieses Verarbeitungsschritts ist eine Liste von Bildpunkten, die als mögliche Kandidaten mit einer gültigen Meldesequenz angesehen werden können.

Im dritten Schritt III werden die Meldesequenzen extrahiert und dekodiert, um bei allen Meldesequenzen die Prüfsumme zu überprüfen. Als Ergebnis wird eine Liste zurückgegeben, die die Bildpunktkoordinaten, die Meldesequenzen und die geschätzte Signalamplitude für jeden Bildpunkt enthält.

Sobald die Bildpunktkoordinaten der erkannten Infraroteinheiten 18, 18' bekannt sind, können sie in Positionskoordinaten innerhalb der Projektionsfläche 21 transformiert werden, wobei das zugrundeliegende geometrische Problem in der betrachteten Projektionsfläche 21 oft vereinfacht werden kann, denn sind doch die möglichen Positionen der Anzeigemodule 1 auf Positionen in einem Stadium beschränkt, wo sich Zuschauer aufhalten können. Beispielsweise können sich Zuschauer auf einer Tribüne frei bewegen, womit die ganze oder zumindest ein Teil der Tribüne als eine geometrische Ebene betrachtet werden kann. Somit besteht das Transformationsproblem darin, einen Punkt auf der Bildebene (innerhalb der Bilderfassungseinheit 210, 211) mit einem Punkt auf der Ebene der Projektionsfläche 21 in Beziehung zu setzen. In der Bildverarbeitung wird die Beziehung zwischen zwei beliebigen Ebenen im Raum als Homographie bezeichnet, die z.B. in «Basic Concepts of the Homography explained with Code» (OpenCV, herunterladbar unter:
https://docs.opencv.org/4.x/d9/dab/tutorial_homography.html ) erläutert wird.

Die Position (x, y) der einen Ebene kann mit der Homographie-Matrix M in die Position (x', y') der anderen Ebene überführt werden.

Die Homographie-Matrix H kann anhand von mindestens vier bekannten Referenzpunkten 213, 214, 215, 215a zwischen den beiden Ebenen berechnet werden. In der Praxis können beispielsweise die vier Ecken eines Projektionsfläche 21 als Referenzpunkte 213-215, 215a angesehen werden und beispielsweise vorübergehend mit Infraroteinheiten 18, 18' ausgestattet werden. Die bekannten Positionen der Referenzpunkte 213-215, 215a und die Bildpunktkoordinaten aus dem Bild können dann zur Berechnung der Matrix H verwendet werden. Solange die jeweilige Bilderfassungseinheit 210, 211 gleich ausgerichtet ist, bleibt die Homographie-Matrix gültig und die Referenzpunkte 213-215, 215a werden nicht mehr benötigt.

Es hat sich gezeigt, dass das erfindungsgemässe Anzeigesystem äusserst robust und genaue Resultate hinsichtlich der Position der beweglichen Anzeigemodule 1 liefert. Es konnte Positionsungenauigkeiten von durchschnittlich 4cm über grössere Distanzen ermittelt werden, was in Anbetracht eines mittleren Abstandes zwischen zwei Anzeigeeinheiten 1 von 60cm äusserst gering ist. Entsprechend können mit dem erfindungsgemässen Anzeigesystem Grossleinwände ohne Weiteres bei Grossanlässen realisiert werden. Dabei hat sich insbesondere als vorteilhaft herausgestellt, wenn die Anzeigemodule 1 mit all ihren Komponenten in einer Mütze, insbesondere Schirmmütze, integriert werden und so an die Zuschauer zum Tragen während der Veranstaltung abgegeben werden.

Die elektronischen Komponenten 7 im Anzeigemodul 1 sind vorgesehen, eine Reihe von Funktionen zu realisieren. Zusammen mit den Batterien 15 oder Akku-Paketen ergibt sich ein überaus leistungsfähiges und unabhängiges Anzeigemodul 1, das für eine grossen Anzahl von Anwendungen eingesetzt werden kann.

Die folgenden Funktionen können einzeln oder in Kombination in den elektronischen Komponenten zusammen mit geeigneter Software, die standartmässig zur Verfügung steht, realisiert werden:
- Drahtlose Datenübertragung, beispielsweise nach dem Wifi-Standard 2.4GHz;
- Bluetooth Low Energy mit Kopplungsoption zu mehreren mit Bluetooth-Schnittstellen ausgestatteten Geräten;
- Drei-Achsen Gyroskop;
- Drei-Achsen Beschleunigungsmesser;
- Gestenerkennung, einschliesslich Unterstützung durch Maschinen-lernbare Algorithmen;
- Mikrophon für die Tonaufnahme und Verarbeitung mittels Maschinen-lernbaren Algorithmen;
- Kryptographischer Co-Prozessor für eine sichere Verschlüsselung und Übertragung von Daten;
- Datenspeicher;
- Infrarot Präzisionsortung, vorzugsweise in Innenräumen;
- USB-C Ladeanschluss für die Batterien 15;
- 4G- und/oder 5G- Kommunikationsmodule für die mobile Kommunikation über bestehende öffentliche oder private Kommunikationsnetzwerke;
- Temperatursensoren;

Das erfindungsgemässe Anzeigemodul 1 kann zum Tragen in Mützen (Caps), Armbändern, Helmhüllen, Sicherheitswesten, Arbeitskleidern verwendet werden, um nur einige Anwendungen zu nennen. Dabei kann das Anzeigemodul 1 auch hinter Textilien getragen werden, denn die äusserst leistungsfähige Displayeinheit 2 kann eine Leuchtdichte von bis zu 6400 Nits erreichen, was in SI-Einheiten ausgedrückt einem Wert von 6400 Candela pro Quadratmeter (cd/m2) entspricht.

### BEZUGSZEICHEN

- 1: Anzeigemodul
- 2: Displayeinheit
- 3: Gehäuse
- 4: Rückseite des Gehäuses
- 5: Vorderseite des Gehäuses
- 6: Innenraum
- 7: elektronische Komponenten
- 8: Begrenzungen
- 9: Ausnehmung
- 10: Winkelbereich
- 11: Tiefe der Ausnehmung
- 12: Dicke des Gehäuses
- 13: Breite der Ausnehmung
- 14: Beugewinkel
- 15: Batterie, Energieversorgungseinheit
- 16: flexible elektrische Verbindung
- 17: Scheitelpunkt
- 18, 18': Infraroteinheit
- 21: Projektionsfläche
- 23: Leuchtmittel
- 24: Steuereinheit
- 25: Datenübermittlungseinheit
- 27: zentrale Recheneinheit
- 28: Datentransmissionseinheit
- 210, 211: Bilderfassungseinheit
- 213-215,215a: Referenzpunkte
- 216, 217: Bandpassfilter
- 218: Videodatei oder Videoquelle
- 219: Rahmenreihe (array of frames)
- 220: Bildpunkte mit hohen Korrelationswerten
- 221: Bildpunkteliste mit gültigen Nachrichten

## Patentansprüche

1. Anzeigemodul (1) mit einer flexiblen Displayeinheit (2) und einem eine Rückseite (4) und eine Vorderseite (5) aufweisenden Gehäuse (3), wobei die flexible Displayeinheit (2) auf der Vorderseite (5) des Gehäuses (3) angeordnet ist, **dadurch gekennzeichnet, dass** das Gehäuse (3) mehrere Innenräume (6) zur Aufnahme von elektronischen Komponenten (7) aufweist, dass das Gehäuse (3) zumindest entlang von Begrenzungen (8) der Innenräume (6) flexibel ist, indem das Gehäuse (3) auf der Rückseite (4) Ausnehmungen (9) aufweist, die sich zumindest teilweise über die Rückseite (4) erstrecken, wodurch das Gehäuse (3) mit der Displayeinheit (2) innerhalb eines vordefinierten Winkelbereichs (10) entlang der Ausnehmungen (9) beugbar ist.

2. Anzeigemodul (1) nach Anspruch 1, **dadurch gekennzeichnet, dass** sich die Ausnehmungen (9) über die ganze Rückseite (4) des Gehäuses (3) erstrecken.

3. Anzeigemodul (1) nach Anspruch 1 oder 2, **dadurch gekennzeichnet, dass** das Gehäuse (3) rechteckig ist und dass die Ausnehmungen (9) parallel zu Seitenwänden des Gehäuses (3) verlaufen.

4. Anzeigemodul (1) nach Anspruch 3, **dadurch gekennzeichnet, dass** die Ausnehmungen (9) eine Matrix mit zwei Reihen und drei Kolonnen auf der Rückseite (4) des Gehäuses (3) mit entsprechenden Innenräumen (6) bilden, wobei die Innenräume (6) vorzugsweise gleich gross sind.

5. Anzeigemodul (1) nach einem der Ansprüche 1 bis 4, **dadurch gekennzeichnet, dass** die Ausnehmungen (9) eine Tiefe (11) aufweisen, die 50% bis 90%, vorzugsweise 60% bis 80%, vorzugsweise 75% einer mittleren Dicke (12) des Gehäuses (3) entspricht.

6. Anzeigemodul (1) nach einem der Ansprüche 1 bis 5, **dadurch gekennzeichnet, dass** die Ausnehmungen (9) auf der Rückseite (4) eine Breite (13) aufweisen, die einen maximalen Biegewinkel (14) der Vorderseite (5) des Gehäuses (3) von 35° ermöglicht.

7. Anzeigemodul (1) nach einem der Ansprüche 1 bis 6, **dadurch gekennzeichnet, dass** die Innenräume (6) mindestens einen der folgenden Komponenten aufnehmen:
- Elektronische Komponenten (7);
- Batterie (15);
wobei die Komponenten (7; 15) mittels flexiblen Prints verbindbar sind.

8. Anzeigemodul (1) nach einem der Ansprüche 1 bis 7, **dadurch gekennzeichnet, dass** die maximale Helligkeit der Displayeinheit (2) 6'400 Candela pro Quadratmeter beträgt.

9. Anzeigemodul (1) nach einem der vorangehenden Ansprüche, **dadurch gekennzeichnet, dass** auf der flexiblen Displayeinheit (2) zum Anzeigen von Informationen im visuellen Bereich zusätzlich mindestens eine Infraroteinheit (18) zum Senden von Infrarotsignalen angeordnet ist.

10. Verwendung des Anzeigemoduls (1) nach einem der Ansprüche 1 bis 10 zum Tragen in Mützen, Armbändern, Helmhüllen, Sicherheitswesten und Arbeitskleidern, wobei das Anzeigemodul (1) vorzugsweise in einer aus transparentem oder teilweise transparentem Textil hergestellten Tasche getragen wird.

11. Anzeigesystem, umfassend
- eine Vielzahl von Anzeigemodulen (1) nach Anspruch 9, die je eine flexible Displayeinheit (2), mindestens eine Infraroteinheit (18, 18'), eine Steuereinheit (24), eine Datenübermittlungseinheit (25) und eine Energieversorgungseinheit (15) aufweisen, wobei bei jedem Anzeigemodul (1) die Displayeinheit (2), die mindestens eine Infraroteinheit (18, 18'), die Steuereinheit (24), die Datenübermittlungseinheit (25) und die Energieversorgungseinheit (15) miteinander wirkverbunden sind,
- eine zentrale Recheneinheit (27),
- mindestens eine Datentransmissionseinheit (28), die einerseits mit der zentralen Recheneinheit (27) anderseits mit der Datenübermittlungseinheit (25) des Anzeigemoduls (1) zumindest zeitweise miteinander wirkverbunden sind,
wobei
- jedem Anzeigemodul (1) ein eindeutiger Identifikationscode zugeordnet ist, der mit einem durch die mindestens eine Infraroteinheit (18, 18') ausgesendetes Infrarotsignal übertragbar ist,
- mindestens eine Bilderfassungseinheit (210, 211) zur Erfassung der mit den Infraroteinheiten (18, 18') ausgesendeten Infrarotsignale vorgesehen ist,
- die mindestens eine Bilderfassungseinheit (210, 211) mit der zentralen Recheneinheit (27) wirkverbunden ist, in der die Positionen der einzelnen Anzeigemodulen (1) bestimmbar sind, und
- die zentrale Recheneinheit (27) einen Datenspeicher mit Bilddaten aufweist, die zumindest teilweise und in Abhängigkeit von der Position der Anzeigemodule (1) bearbeitet und an diese zur Einstellung von Helligkeit und/oder Farbe der entsprechenden Displayeinheit (2) übertragen werden.

12. Anzeigesystem nach Anspruch 11, **dadurch gekennzeichnet, dass** ein Bandpassfilter (216, 217) vor der Bilderfassungseinheit (210, 211) angeordnet ist, wobei das Bandpassfilter (216, 217) vor allem Infrarotsignale mit Wellenlängen im Bereich von 700nm bis 1400nm durchlässt.

13. Verfahren zum Betrieb eines Anzeigesystems nach Anspruch 11 oder 12, wobei das Verfahren die Schritte umfasst:
- Aussenden eines mit einer Infraroteinheit (18, 18') des Anzeigemoduls (1) gemäss Anspruch 9 erzeugten Infrarotsignals, umfassend einen modulierten Identifikationscode, der für das jeweilige Anzeigemodul (2) eindeutig ist,
- Erfassen des Infrarotsignals mit einer Bilderfassungseinheit (210, 211),
- Ermitteln einer momentanen Position des Anzeigemoduls (1),
- Ermitteln eines Helligkeitswertes und/oder eines Farbewertes eines Anzeigemoduls (1) aufgrund der momentanen Position und aufgrund von abgespeicherten Bilddaten,
- Übertragen der Helligkeitswerte und/oder der Farbwerte an das jeweilige Anzeigemodul (1),
- Einstellen der Helligkeitswerte und/oder der Farbwerte im Anzeigemodul (1).

14. Verfahren nach Anspruch 13, **gekennzeichnet durch** Filtern von Signalen mit einem Bandpassfilter (216, 217) vor dem Erfassen mit der Bilderfassungseinheit (210, 211), wobei das Bandpassfilter (216, 217) vor allem Infrarotsignale mit Wellenlängen im Bereich von 700nm bis 1400nm durchlässt.

15. Verfahren nach Anspruch 13 oder 14, **dadurch gekennzeichnet, dass** der Schritt zur Ermittlung der momentanen Position des Anzeigemoduls (1) folgendes umfasst:
- Erzeugen einer Bildabfolge aus einer mit den Bilderfassungseinheiten (210, 211) aufgenommenen Videosequenzen,
- Berechnung der Kreuzkorrelation zwischen einer Synchronisationssequenz und Werten eines Bildpunktes,
- Vergleichen der berechneten Kreuzkorrelation mit einem vorgegebenen Schwellwert,
- Selektion der Bildpunkte, welche einen über dem vorgegebenen Schwellwert liegenden Kreuzkorrelationswert aufweisen,
- Extrahieren der Meldesequenzen an den selektierten Bildpunkten,
- Erzeugen für jeden ermittelten Bildpunkt die Bildpunktkoordinaten, eine entsprechende Meldesequenz und eine geschätzte Signalamplitude.

16. Verfahren nach Anspruch 15, **dadurch gekennzeichnet, dass** der Schritt des Ermittelns eines Helligkeitswertes und/oder eines Farbewertes eines Anzeigemoduls (1) aufgrund der momentanen Position und aufgrund von abgespeicherten Bilddaten folgendes umfasst:
- Umwandeln von Bildpunktkoordinaten in Positionskoordinaten eines Anzeigemoduls (1) innerhalb einer Projektionsfläche (21) mit Hilfe einer Homographie-Abbildung und
- Zuweisung eines Helligkeitswertes und/oder eines Farbewertes an den Positionskoordinaten des Anzeigemoduls (1) aufgrund von abgespeicherten Bilddaten.
